# EUROPÄISCHE PATENTANMELDUNG

(11) **EP 0 733 681 A2**
(43) Veröffentlichungstag der Anmeldung: **25.09.1996**
(21) Anmeldenummer: 96107882.1
(22) Anmeldetag: 03.03.1993
(51) Int. Cl.: C09D 5/44, C08L 101/02

(54) **Kunstharze**

(30) Priorität: 11.03.1992 DE 4207653
(62) Teilanmeldung aus: 93103366.6
(71) Anmelder: BASF Lacke + Farben AG, 48165 Münster-Hiltrup (DE)
(72) Erfinder: Huemke, Klaus, Dr., 67159 Friedelsheim (DE); Hoffmann, Gerhard, Dr., 67166 Otterstadt (DE); Faul, Dieter, Dr., 67098 Bad Dürkheim (DE)
(74) Vertreter: Fitzner, Uwe, Dr.

(57) **Zusammenfassung**

Kunstharze, enthaltend als wesentliche Komponenten
A) 20 bis 95 Gew.-% vernetzbare Bindemittel aus der Gruppe der Polymerisations-, Polyadditions- oder Polykondensationsprodukte mit reaktionsfähigen Zentren in Form von Hydroxy-, Thio-, primären und/oder sekundären Aminogruppen und/oder hydrophilen Zentren in Form von Ammonium-, Sulfonium- und/oder Phosphoniumgruppen und
B) 5 bis 80 Gew.-% Polymerisate, aufgebaut aus einem Kern und einer oder mehreren Schalen sowie darüber hinaus
C) 0 bis 50 Gew.-% eines oder mehrerer Vernetzer und
D) 0 bis 50 Gew.-% einer Pigmentzubereitung aus einem oder mehreren Pigmenten und einem Harz mit oberflächenaktiven Eigenschaften und
E) 0 bis 10 Gew.-% Zusatzstoffe und/oder Hilfsmittel.

## Beschreibung

Die vorliegende Erfindung betrifft Kunstharze, die als wesentliche Komponenten
A) 20 bis 95 Gew-% vernetzbare Bindemittel aus der Gruppe der Polymerisations-, Polyadditions- oder Polykondensationsprodukte mit reaktionsfähigen Zentren in Form von Hydroxy-, Thio-, primären und/oder sekundären Aminogruppen und/oder hydrophilen Zentren in Form von Ammonium-, Sulfonium- und/oder Phosphoniumgruppen und
B) 5 bis 80 Gew.-% Polymerisate, aufgebaut aus einem Kern und einer oder mehreren Schalen sowie darüber hinaus
C) 0 bis 50 Gew.-% eines oder mehrerer Vernetzer und
D) 0 bis 50 Gew.-% einer Pigmentzubereitung aus einem oder mehreren Pigmenten und einem Harz mit oberflächenaktiven Eigenschaften und
E) 0 bis 10 Gew.-% Zusatzstoffe und/oder Hilfsmittel.
enthalten.
Ferner betrifft die vorliegende Erfindung ein Verfahren zur Herstellung dieser Kunstharze sowie deren Verwendung in Elektrotauchlacken.
Um Metallteile zu beschichten, wird, insbesondere in der Automobilindustrie, das kathodische Elektrotauchlackierverfahren immer häufiger angewandt. Dazu werden kathodisch abscheidbare Kunstharze benötigt, die den beschichteten Gegenstand vor Korrosion schützen. Gleichzeitig sollten die erhaltenen Überzüge elastisch sein, um nicht durch Schläge beschädigt zu werden.
Elektrotauchlackierharze bestehen üblicherweise aus einem Bindemittel und verschiedenen Zusätzen, die die Eigenschaften der aus den Harzen erhältlichen Überzüge beeinflussen.
Pfropfcopolymere auf Acrylatbasis sind z. B. aus der DE-A1-38 30 626 bekannt. Ferner werden beispielsweise in der EP-A2-342 042 Pfropfcopolymere beschrieben, deren Haupt- und Nebenketten unterschiedliche Polarität aufweisen.

Aufgabe der vorliegenden Erfindung war es, Kunstharze zu entwickeln, aus denen Überzüge hergestellt werden können, die schlagfest sind, einen guten Korrosionsschutz bieten und gleichzeitig sowohl gut verlaufen als auch gut an nachfolgenden Lackschichten haften.

Diese Aufgabe wird dadurch gelöst, daß
das Polymerisat (B) erhältlich ist durch γ) Emulsionspolymerisation von 3 bis 90 Gew.-% eines Monomerengemisches (γ) aus
γ₁) 30 bis 100 Gew.-% mindestens eines vinylaromatischen Monomeren
γ₂) 0 bis 70 Gew.-% mindestens eines C₁-C₁₈-Alkylmethacrylates
γ₃) 0 bis 70 Gew.-% mindestens eines C₁-C₁₈-Alkylacrylates
γ₄) 0 bis 30 Gew.-% mindestens eines zwei- oder mehrfach ethylenisch ungesättigten Monomeren mit mindestens einer nicht konjugierten Doppelbindung
γ₅) 0 bis 30 Gew.-% mindestens eines weiteren Monomeren
und δ) anschließende Emulsionspolymerisation in Gegenwart des nach Stufe (γ) erhaltenen Emulsionspoly-merisates von 2 bis 70 Gew.-% eines Monomerengemisches (δ) aus
δ₁) 10 bis 90 Gew.-% mindestens eines konjugierten Diens
δ₂) 10 bis 90 Gew.-% mindestens eines vinylaromatischen Monomeren
δ₃) 0 bis 30 Gew.-% mindestens eines zwei- oder mehrfach ethylenisch ungesättigten Monomeren mit mindestens einer nicht konjugierten Doppelbindung
δ₄) 0 bis 30 Gew.-% mindestens eines weiteren Monomeren
und ε) anschließende Emulsionspolymerisation in Gegenwart des nach Stufe (δ) erhaltenen Emulsionspolymerisates von 5 bis 95 Gew.-% eines Monomerengemisches (ε) aus
ε₁) 10 bis 80 Gew.-% mindestens eines vinylaromatischen Monomeren
ε₂) 20 bis 90 Gew.-% eines C₁-C₁₈-Alkylmethacrylates
ε₃) 0 bis 70 Gew.-% mindestens eines C₁-C₁₈-Alkylacrylates
ε₄) 0 bis 30 Gew.-% mindestens eines zwei- oder mehrfach ethylenisch ungesättigten Monomeren mit mindestens einer nicht konjugierten Doppelbindung
ε₅) 0 bis 30 Gew.-% mindestens eines weiteren Monomeren,
wobei sich die Gewichtsprozente der in den Stufen (γ) bis (ε) eingesetzten Monomerengemische (γ) bis (ε) auf die Komponente (B) beziehen und sich auf 100 Gew.-% addieren.

### Komponente (A)

Erfindungsgemäß enthalten die Kunstharze als Komponente (A) ein vernetzbares Bindemittel oder eine Mischung verschiedener derartiger Bindemittel. Der Bindemittelgehalt liegt im allgemeinen zwischen 20 bis 95 Gew.-%, vorzugsweise zwischen 30 bis 85 Gew.-%.
Die Grundbausteine der als Komponente (A) in Betracht kommenden Bindemittel sind Polymerisations-, Polykondensations- oder Polyadditionsprodukte, die reaktionsfähige Zentren in Form von Hydroxy-, Thio-, primären oder sekundären Aminogruppen enthalten. Über diese reaktiven Zentren können die Bindemittel beispielsweise durch Protonieren wasserdispergierbar oder durch Reaktion mit einem Vernetzer (Komponente (C)) vernetzt werden.
Die mittleren Molekulargewichte M_{w} der Grundbausteine liegen im allgemeinen zwischen 200 und 5000, vorzugsweise zwischen 250 und 3000, wobei der Gehalt an reaktiven Zentren im allgemeinen von 1,5 bis 3,0, vorzugsweise von 1,8 bis 2,5 Äquivalenten pro Molekül liegt. Beispiele geeigneter Materialien sind Polyester, Alkydharze, Polyether, Polyacrylate, Polyurethane und Polyepoxide.
Diese Grundbausteine können zusätzlich mit Aminen, Alkoholen, Thiolen oder Mischungen dieser Verbindungen umgesetzt werden. Geeignete Polyester sind solche aus aliphatischen und/oder aromatischen Dicarbonsäuren mit 4 bis 10 Kohlenstoffatomen und mehrwertigen Alkoholen bzw. Thiolen. Geeignete Alkydharze sind ähnlich aufgebaut, nur enthalten sie zusätzlich eine oder mehrere Monocarbonsäuren, z. B. Fettsäuren. Auch Alkydharze, welche Glycidylester von verzweigten Carbonsäuren enthalten, können verwendet werden. Aliphatische oder araliphatische Polyether mit reaktionsfähigen Zentren sind ebenfalls einsetzbar. Zweckmäßigerweise können sie durch Umsetzen von zwei- und/oder mehrwertigen Alkoholen mit Ethlyen- und/oder Propylenoxid erhalten werden. Zu der Gruppe der Polymerisationsprodukte gehören Polyacrylate, die durch Copolymerisation von Hydroxy- oder Aminogruppen enthaltenden Monomeren bzw. einer Mischung verschiedener solcher Monomerer mit anderen ungesättigten Monomeren hergestellt werden können, wie Aminoacrylat- und -methacrylatharze. Weiterhin ist es möglich, epoxidgruppentragende Acrylate wie Glycidylmethacrylat zu polymerisieren und die Polymerisate durch Umsetzen mit Aminen zu derivatisieren. Als Polykondensationsprodukte sind z. B. Kondensationsprodukte aus Polycarbonsäuren mit Polyaminen einsetzbar. Umsetzungsprodukte aus dimerisierten oder trimerisierten Fettsäuren und Polyaminen wie Ethylendiamin, 1,2- und 1,3-Diaminopropan, Diethylentriamin, Dipropylentriamin, Triethylentetraamin sind geeignet, sofern sie die erforderlichen reaktionsfähigen Zentren enthalten. Polyurethane aus aliphatischen und/oder aromatischen Diisocyanaten und aliphatischen Diolen haben sich ebenfalls als geeignet erwiesen, sofern sie die erforderlichen reaktionsfähigen Zentren aufweisen.
Bevorzugte Bindemittel sind solche, deren Grundstruktur auf Epoxidharzen basiert.
Es können Epoxidharze eingesetzt werden, die Umsetzungsprodukte mehrwertiger Phenole mit Epihalogenhydrin sind, wobei das Molekulargewicht durch das Verhältnis Phenol zu Epihalogenhydrin gesteuert werden kann.
Beispiele für derartige mehrwertige Phenole sind Resorcin, Hydrochinon, 2,2-Di-(4-hydroxyphenyl)propan (Bisphenol A), p,p'-Dihydroxybenzophenon, p,p'-Dihydroxydiphenyl, 1,1-Di-(4-hydroxyphenyl)ethan, Bis-(2-hydroxynaphthyl)methan, 1,5-Dihydroxynaphthylen und Novolake. Bisphenol A wird bevorzugt verwendet. Das bevorzugte Epihalogenhydrin ist Epichlorhydrin.
Neben Epoxidharzen aus mehrwertigen Phenolen und Epihalogenhydrin können Polyglycidylether mehrwertiger Alkohole wie Ethylenglykol, Diethylenglykol, Triethylenglykol, 1,2-Propylenglykol, 1,3-Propandiol, 1,4-Butandiol, 1,5-Pentandiol, 1,6-Hexandiol, 1,2,6-Hexantriol, Glycerin oder Bis-(4-hydroxycyclohexyl)-2,2-propan verwendet werden.
Ganz besonders bevorzugt ist es, Epoxidharze, die Diglycidylether von Bisphenol A sind, mit mehrwertigen Phenolen, insbesondere Bisphenol A, zu modifizieren.
Die Epoxidharze können mit einem gesättigten oder ungesättigten primären und/oder sekundären Amin oder Mischungen verschiedener Amine umgesetzt werden. Zu den Aminen zählen Alkylamine, Alkylalkanolamine, Polyoxyalkylenpolyamine und mehrwertige Polyolefinamine.
Eine weitere Möglichkeit, die Epoxidharze zu modifizieren, besteht darin, sie mit sekundären Aminen umzusetzen, die geblockte primäre Aminogruppen enthalten, wie Methylisobutylketimine.
Falls gewünscht, können die mit Aminen modifizierten Epoxidharze mit gesättigten oder ungesättigten Polycarbonsäuren kettenverlängert werden, z. B. mit Sebacinsäure oder dimerer Fettsäure. Eine Mitverwendung von Monocarbonsäuren wie Stearinsäure oder Fettsäure ist ebenfalls möglich.
Die Bindemittel haben im allgemeinen ein mittleres Molekulargewicht von etwa 200 bis etwa 20000. Sie können selbstvernetzende Gruppen tragen, die beispielsweise durch Umsetzen mit halbblockierten Isocyanaten in das Harz eingeführt werden können. Kunstharze, deren Bindemittel (A) nicht selbstvernetzend sind, enthalten noch eine Vernetzerkomponente (C).

### Komponente (B)

Erfindungsgemäß enthalten die Kunstharze als Komponente (B) ein Polymerisat, das aus einem Kern und einer oder mehreren Schalen aufgebaut ist. Es kann auch eine Mischung verschiedener derartiger Polymerisate vewendet werden. In der Regel beträgt der Anteil der Komponente (B) an den Kunstharzen 5 bis 80 Gew.-%, vorzugsweise 5 bis 30 Gew.-%. Im allgemeinen haben die Polymerisate eine oder zwei Schalen. Sie können jedoch auch aus mehr Schalen aufgebaut sein, enthalten aber meist nicht über vier Schalen.
Diese erfindungsgemäßen Kern-Schale-Polymerisate sind durch mehrstufige Polymerisation, bevorzugt durch Emulsionspolymerisation in mehreren Stufen erhältlich.

Bei den Polymerisaten (B), die durch Emulsionspolymerisation in drei Stufen hergestellt werden, werden solche bevorzugt, bei der in der ersten Stufe (γ) ein Monomerengemisch (γ) aus
γ₁) 30 bis 100 Gew.-%, vorzugsweise 30 bis 60 Gew.-% eines vinylaromatischen Monomeren
γ₂) 0 bis 70 Gew.-%, vorzugsweise 10 bis 40 Gew.-% mindestens eines C₁-C₁₈-Alkylmethacrylates
γ₃) 0 bis 70 Gew.-%, vorzugsweise 10 bis 40 Gew.-%, mindestens eines C₁-C₁₈-Alkylacrylates
γ₄) 0 bis 30 Gew.-%, vorzugsweise 10 bis 30 Gew.-%, mindestens eines zwei- oder mehrfach ethylenisch ungesättigten Monomeren mit mindestens einer nicht konjugierten Doppelbindung
γ₅) 0 bis 30 Gew.-%, vorzugsweise 10 bis 30 Gew.-%, mindestens eines weiteren Monomeren eingesetzt wird.

In der Stufe (δ) wird bevorzugt eine Monomerengemisch (δ) aus
δ₁) 10 bis 90 Gew.-%, vorzugsweise 40 bis 60 Gew.-% mindestens eines konjugierten Diens
δ₂) 10 bis 90 Gew.-%, vorzugsweise 20 bis 40 Gew.-% mindestens eines vinylaromatischen Monomeren
δ₃) 0 bis 30 Gew.-%, vorzugsweise 10 bis 30 Gew.-% mindestens eines zwei- oder mehrfach ethylenisch ungesättigten Monomeren mit mindestens einer nicht konjugierten Doppelbindung
δ₄) 0 bis 30 Gew.-%, vorzugsweise 10 bis 30 Gew.-% mindestens eines weiteren Monomeren eingesetzt.

In der Stufe (ε) wird bevorzugt ein Monomerengemisch (ε) aus
ε₁) 10 bis 80 Gew.-%, vorzugsweise 20 bis 40 Gew.-% mindestens eines vinylaromatischen Monomeren
ε₂) 20 bis 90 Gew.-%, vorzugsweise 30 bis 50 Gew.-% eines C₁-C₁₈-Alkylmethacrylates
ε₃) 0 bis 70 Gew.-%, vorzugsweise 10 bis 40 Gew.-% mindestens eines C₁-C₁₈- Alkylacrylates
ε₄) 0 bis 30 Gew.-%, vorzugsweise 10 bis 30 Gew.-% mindestens eines zwei- oder mehrfach ethylenisch ungesättigten Monomeren mit mindestens einer nicht konjugierten Doppelbindung
ε₅) 0 bis 30 Gew.-%, vorzugsweise 10 bis 30 Gew.-% mindestens eines weiteren Monomeren eingesetzt.

Der Gewichtsanteil des Monomerengemisches (γ) am gesamten Polymerisat (B) beträgt in der Regel 3 bis 95 Gew.-%, bevorzugt 30 bis 70 Gew.-%. Der Gewichtsanteil des Monomerengemisches (δ) am gesamten Polymerisat (B) beträgt in der Regel 2 bis 70 Gew.-%, bevorzugt 20 bis 60 Gew.-%. Da sich die Gewichtsanteile der in den Stufen (γ) bis (ε) eingesetzten Monomerengemische (γ) bis (ε) auf 100 Gew.-% addieren, beträgt dementsprechend der Gewichtsanteil des Monomerengemisches (ε) am gesamten Polymerisat (B) in der Regel 5 bis 95 Gew.-%, bevorzugt 10 bis 50 Gew.-%.
Als vinylaromatische Monomere eignen sich Styrol sowie dessen ein- oder mehrfach kernsubstituierte Derivate, beispielsweise 4-Methylstyrol, 4-Ethylstyrol, 4-Isopropylstyrol, 3,4-Dimethylstyrol, 4-Chlorstyrol, 4-Bromstyrol, 3,4-Dichlorstyrol.
Besonders bevorzugt ist Styrol.
Als konjugiertes Dien ist Butadien besonders bevorzugt. Daneben kommen beispielsweise Isopren und Chloropren in Betracht.
Bevorzugte Alkylmethacrylate sind C₁-C₄-Alkylmethacrylate, insbesondere Methylmethacrylat.
Unter den Alkylacrylaten sind die C₁-C₁₂-Allkylacrylate, z. B. Methylacrylat, Ethylacrylat, Butylacrylat, 2-Ethylhexylacrylat, Laurylacrylat, von besonderer Bedeutung.

Als vernetzend wirkende zwei- oder mehrfach ethylenisch ungesättigte Monomere mit mindestens zwei isolierten Doppelbindungen sind z. B. Allyl-, Methallyl- und Vinylester von Di-, Tri- oder höheren Carbonsäuren wie z. B. Adipinsäuredivinylester, Phthalsäurediallylester, Maleinsäurediallylester, Fumarsäurediallylester; Allyl-, Methallyl- und Vinylether mehrfunktioneller Alkohole wie Ethylenglykoldivinylether, 1,3-Butandioldivinylether, 1,4-Butandioldivinylether, Pentaerythrittriallylether; Ester der Acryl- oder Methacrylsäure mit mehrwertigen Alkoholen wie Ethylenglykoldi(meth)acrylat, 1,2-Propandioldi(meth)acrylat, 1,3-Propandioldi(meth)acrylat, 1,3-Butandioldi(meth)acrylat, 1,4-Butandioldi(meth)acrylat, Oligo- oder Polyethylenglykoldi(meth)acrylat, Divinylbenzol oder Mischungen der genannten Substanzen geeignet. Bevorzugt sind zweifach ungesättigte Monomere, insbesondere Divinylbenzol sowie 1,3-Butandioldi(meth)acrylat und 1,4-Butandioldi-(meth)acrylat.
Weitere Monomere können z. B. Vinylether wie Vinylisobutylether sowie Vinylester wie Vinylacetat oder Vinylpropionat sein. Es können aber auch ethylenisch ungesättigte Nitrile wie Acrylnitril oder Methacrylnitril eingesetzt werden. In den Stufen (α) und (δ) kommen als weitere Monomere auch die obengenannten Alkyl(meth)acrylate in Betracht.
Die Herstellung der Pfropfcopolymerisate erfolgt, wie bereits erwähnt, bevorzugt durch Emulsionspolymerisation.
Als Emulgatoren dienen z. B. Natrium-, Kalium- oder Ammoniumsalze von gesättigten oder ungesättigten C₈-C₂₀-Fettsäuren wie Laurinsäure, Stearinsäure, Palmitinsäure, Ölsäure, C₈-C₂₀-Alkylsulfonsäuren, Schwefelsäure-C₈-C₂₀-alkylestern, Alkylbenzolsulfonsäuren, Abiethinsäure und deren Derivaten, Sulfobernsteinsäurealkylestern, alkylierten Diphenylethersulfonsäuren.
Durch die Wahl von Art und Menge des Emulgators kann in bekannter Weise die Teilchengröße der Emulsion eingestellt werden. Sie kann zwischen 50 und 150 nm liegen. Bevorzugt liegt sie im Bereich von 80 bis 120 nm. Durch die Teilchengröße werden sowohl die mechanischen Eigenschaften (Schlagzähigkeit) beeinflußt als auch die Oberflächenbeschaffenheit der aus den Kunstharzen erhältlichen Lacküberzüge.
Als Initiatoren können wasserlösliche thermisch zerfallende Initiatoren oder Redoxsysteme eingesetzt werden. Geeignete thermisch zerfallende Initiatoren sind beispielsweise Natrium-, Kalium- oder Ammoniumpersulfat sowie wasserlösliche Azoverbindungen wie das Natriumsalz der 4,4'-Azo-bis-(4,4'-cyanopentansäure). Als Redoxsysteme kommen beispielsweise Cumolhydroperoxid, Diisopropylbenzolhydroperoxid, t-Butylhydroperoxid, t-Butylperacetat in Kombination mit Reduktionsmitteln wie Natriumformaldehydsulfoxylat oder Ascorbinsäure in Gegenwart von Eisensalzen in Betracht. Auch die genannten Persulfate können in Kombination mit Reduktionsmitteln wie Natrium- oder Kaliummetabisulfit in Redoxsystemen eingesetzt werden.
Die Polymerisationstemperatur liegt im allgemeinen zwischen 10 und 100 °C, bevorzugt bei 50 bis 90 °C.
Es werden zunächst die Monomeren der ersten Stufe, z.B. (α) oder (δ) polymerisiert. Danach werden die Monomeren der weiteren Stufen z. B. (β) oder (γ) bis (ε) zur wäßrigen Emulsion gegeben. Die Monomeren in den einzelnen Stufen werden zu mehr als 50 Gew.-%, bevorzugt zu mehr als 70 Gew.-%, besonders bevorzugt zu mehr als 80 Gew.-% auspolymerisiert, bevor mit der Zugabe der Monomeren einer weiteren Stufe begonnen wird.
Der Feststoffgehalt der Emulsionen beträgt bevorzugt 20 bis 70 Gew.-%.
Das Polymerisat (B) kann aus der Emulsion bzw. Dispersion in bekannter Weise z. B. durch Fällung oder Sprühtrocknung isoliert oder, wie es bevorzugt wird, in Form der Emulsion oder Dispersion weiterverwendet werden.

### Komponente C

Der als Komponente (C) im allgemeinen in 0 bis 50, vorzugsweise 5 bis 40 Gew.-% im Kunstharz gegebenenfalls enthaltene Vernetzer kann ein blockierter Isocyanatvernetzer, ein Transesterifizierungs-Transamidierungs- oder Transaminierungsvernetzer sein. Es können aber auch Mischungen verschiedener Vernetzer verwendet werden. Vernetzer (C) kann separater Bestandteil des Kunstharzes sein. Die Vernetzermoleküle können aber auch mit dem Bindemittel (A) verknüpft werden. Erst bei Bedarf erfolgt durch Einstellen geeigneter Bedingungen die Vernetzung dieser sogenannten selbstvernetzenden Bindemittel.
Als blockierte Isocyanatvernetzer kommen z. B. Polyoxyalkylenpolyisocyanate mit möglichst hohem Anteil an Polyoxyalkylendiisocyanat, aromatische Diisocyanate wie Toluylendiisocyanat, aliphatische Diisocyanate wie trimerisiertes Hexamethylendiisocyanat in Betracht. Diese können beispielsweise mit Ketoximen oder Polyolen verkappt werden.
Verbindungen, die Transamidierungsvernetzer bilden, sind Verbindungen, vorzugsweise Polyesterharze, die freie Carboxylgruppen enthalten, an denen Carbalkoxymethylgruppen angelagert werden können. Die Carbalkoxymethylester reagieren mit freien primären und/oder sekundären Aminogruppen der Bindemittel unter Amidbildung.

Bindemittel, die als reaktionsfähige Zentren Hydroxylgruppen haben, können z. B. durch Transesterifizierungsvernetzer ausgehärtet werden. Diese Vernetzer können beispielsweise dadurch hergestellt werden, daß Epoxidharze auf der Basis von Bisphenol A und Epihalohydrin in einem ersten Reaktionsschritt mit einer Dicarbonsäure umgesetzt werden. In einem zweiten Reaktionsschritt lassen sich diese Polyepoxid-Dicarbonsäureaddukte z. B. mit Glykolsäureestern z. B. Glykolsäuremethylester oder mit Alkylenoxiden wie Ethylenoxid, Propylenoxid oder Glycidylestern verzweigter aliphatischer Carbonsäuren, insbesondere Versaticsäureglycidylester umsetzen.
Mannich-Basen, die Umsetzungsprodukte aus Phenolen, Formaldehyd und sekundären Aminen sind, können ebenfalls als Vernetzerkomponente (C) verwendet werden. Zur Herstellung dieser Transaminierungsvernetzer werden beispielsweise epoxidgruppentragende Verbindungen wie Polyoxypropylendiglycidylether mit mehrwertigen Phenolen wie Bisphenol A umgesetzt und anschließend mit Dialkylaminen wie Dimethylamin, Diethylamin, Piperidin und mit Formaldehyd oder Verbindungen, die Formaldehyd liefern, umgesetzt.
Durch entsprechende Reaktionen können in die obengenannten Vernetzer zusätzliche Hydroxy-, Thiol- und/oder Amingruppen eingeführt werden.
Anschließend wurden die in Tabelle I angegebenen Acrylate mit 0,8 g Peroxodisulfat gemischt und innerhalb von 30 Minuten zudosiert. Es wurde noch 3 bis 4 Stunden bei 70 °C nachgerührt.
Das so erhaltene emulgierte Polymerisat wurde dem unten beschriebenen Bindemittel zugesetzt.

**Tabelle I**

| Polymerisate (B₁) bis (B₁₀) mit einem Kern und einer Schale | | | | | | | | |
|---|---|---|---|---|---|---|---|---|
| | Monomere | | | | | | | |
| Bsp. Nr | Butadien (g) | Styrol (g) | MMA⁽¹⁾ (g) | EA⁽²⁾ (g) | DMAEA⁽³⁾ (g) | DEAEA⁽⁴⁾ (g) | HEA⁽⁵⁾ (g) | HPA⁽⁶⁾ (g) |
| B₁ | 252 | 168 | 180 | - | - | - | - | - |
| B₂ | 270 | 180 | - | 132 | 18 | - | - | - |
| B₃ | 288 | 192 | - | 100 | - | 20 | - | - |
| B₄ | 270 | 180 | - | 120 | 15 | - | 15 | - |
| B₅ | 288 | 192 | - | 80 | - | 25 | - | 15 |
| B₆ | 315 | 105 | 180 | - | - | - | - | - |
| B₇ | 337 | 112 | - | 132 | 18 | - | - | - |
| B₈ | 360 | 120 | - | 100 | - | 20 | - | - |
| B₉ | 315 | 105 | - | 120 | 15 | - | 15 | - |
| B₁₀ | 360 | 120 | - | 80 | - | 25 | - | 15 |

| | | | | | | | | |
|---|---|---|---|---|---|---|---|---|
| ⁽¹⁾MMA: Methylmethacrylat | | | | | | | | |
| ⁽²⁾EA: Ethylacrylat | | | | | | | | |
| ⁽³⁾DMAEA: Dimethylaminoethylacrylat | | | | | | | | |
| ⁽⁴⁾DEAEA: Diethylaminoethylacrylat | | | | | | | | |
| ⁽⁵⁾HEA: Hydroxyethylacrylat | | | | | | | | |
| ⁽⁶⁾HPA: Hydroxypropylacrylat | | | | | | | | |

### Komponente D

Gewünschtenfalls können den Kunstharzen Pigmentzubereitungen zugegeben werden. So können die Kunstharze vorzugsweise von 0 bis 50 Gew.-%, insbesondere von 5 bis 40 Gew.-% einer Pigmentzubereitung aus einem oder mehreren Pigmenten und einem Harz mit oberflächenaktiven Eigenschaften, ein sogenanntes Reibharz, enthalten.
Gebräuchliche Pigmente sind beispielsweise Eisen- und Bleioxide, Strontiumcarbonat, Ruß, Titandioxid, Talkum, Bariumtitanat, Cadmiumgelb, Cadmiumrot, Chromgelb, Phthalocyaninblau oder metallische Pigmente wie Aluminiumflocken.
Die Harze der Zubereitung sollten ein hohes Pigmenttragevermögen besitzen und mit dem jeweiligen Bindemittel des Kunstharzes verträglich sein.
Bevorzugte Reibharze enthalten Diglycidylether auf der Basis von Bisphenol A und Epichlorhydrin, die mit einem Amin, besonders einem aliphatischen Diamin wie Hexamethylendiamin, modifiziert sind.

### Komponente E

Zusätzlich können die erfindungsgemäßen Kunstharze einen oder mehrere Zusatzstoffe wie verschiedene Füller, Antioxidantien, UV-Absorber, verlauffördernde Mittel, Entschäumer, und andere Zusätze, z. B. Polyvinylether, enthalten. Diese Materialien machen in der Regel von 0 bis etwa 10 Gew.-%, insbesondere von 0 bis 5 Gew.-% des Kunstharzes aus. Zu den bevorzugten Füllern gehören Aluminiumsilikate, Aluminiumsulfate und Bariumsulfat.
Benzotriazole und Oxalsäureanilide haben sich als besonders gute UV-Absorper erwiesen. Butylglykol und Propylenglykolphenylether sind Beispiele für verlauffördernde Mittel. Entschäumend wirken beispielsweise Fettsäureester von Butin-1,4-diol oder auch naphthenische Mineralöle.
Die einzelnen Komponenten des Kunstharzes können jeweils in organischen Lösungsmitteln gelöst vorliegen. In Betracht kommende Lösungsmittel sind aromatische Kohlenwasserstoffe wie Toluol und Xylol, Glykole, Glykolether wie Diethylenglykolmethylether und Alkohole.
Das Kunstharz kann als Mischung der Komponenten oder deren Lösungen als Überzugsmittel für verschiedene Substrate dienen.
Durch die Zugabe von Säuren, bevorzugt Carbonsäuren wie Ameisen-, Essig- oder Milchsäuren, aber auch anorganischer Säuren z. B. Phosphorsäure, können die Kunstharze in Wasser dispergiert und durch übliche Methoden auf Substrate aus Holz, Kunststoff oder Metall aufgebracht werden. Bevorzugt ist es jedoch, die Komponenten jeweils getrennt zu protonieren, getrennt in Wasser zu dispergieren, gewünschtenfalls das organische Lösungsmittel abzuziehen und anschließend die Einzeldispersionen zu mischen. Selbstverständlich ist es auch möglich, den einzelnen Komponenten jeweils die Zusatzstoffe zuzugeben und es anschließend zu dispergieren.
Die erfindungsgemäßen Kunstharze eignen sich in Form ihrer wäßrigen Dispersionen für die Elektrotauchlackierung von elektrisch leitfähigen Gegenständen, wie Metallteilen. Für die kathodische Elektrotauchlackierung wird im allgemeinen ein Feststoffgehalt des Elektrotauchbades von 5 bis 40 Gew.-%, vorzugsweise von 10 bis 30 Gew.-% eingestellt. Die Abscheidung erfolgt üblicherweise bei Temperaturen zwischen 15 °C und 40 °C, vorzugsweise zwischen 20 und 35 °C während einer Zeit von 1 bis 5 min und bei pH-Werten zwischen 5 und 8, bevorzugt um den Neutralpunkt, bei Spannungen zwischen 50 und 500 V, vorzugsweise von 150 bis 450 V. Der zu beschichtende elektrisch leitfähige Gegenstand wird dabei als Kathode geschaltet. Der abgeschiedene Film wird bei Temperaturen von etwa 100 °C bis etwa 200 °C ca. 10 bis ca. 30 min gehärtet.
Die unter Verwendung der erfindungsgemäßen Kunstharze erhältlichen Überzüge weisen eine sehr gute Steinschlagfestigkeit bei gleichzeitig sehr gutem Korrosionsschutz auf. Außerdem sind die so erhältlichen Überzüge glatt.

### Beispiele

### Herstellung der Polymerisate (B)

### I) Polymerisate mit einem Kern und einer Schale

Allgemeine Arbeitsvorschrift für die Polymerisate (B₁) bis (B₁₀)
600 g voll entsalztes Wasser wurden mit 0,5 g C₁₄/C₁₅-Paraffinsulfonat (z. B. Emulgator K 30 der Bayer AG) versetzt und auf 70 °C erhitzt. Binnen einer Stunde wurde eine Mischung aus 1,3 g Peroxodisulfat und Tabelle I zu entnehmenden Mengen an Butadien und Styrol zudosiert und noch 4 Stunden bei 70 °C gehalten.

### II) Polymerisate mit einem Kern und zwei Schalen

Allgemeine Arbeitsvorschrift für die Polymerisate (B₁₁) bis (B₂₀)
Eine Mischung aus 600 g voll entsalztem Wasser und 0,5 g C₁₄/C₁₅-Paraffinsulfonat (z. B. Emulgator K 30 der Bayer AG) wurde auf 70 °C erhitzt, mit 20 g Styrol versetzt und 30 Minuten lang gerührt. Anschließend wurden 0,9 g Peroxodisulfat zugegeben und noch etwa 2 Stunden nachgerührt.
Zu dem so erhaltenen Kern wurde innerhalb einer Stunde eine Mischung aus 1,1 g Peroxodisulfat und Tabelle II zu entnehmende Mengen an Butadien und Styrol zudosiert. Es wurde noch etwa 4 Stunden bei 70 °C bis 80 °C nachgerührt.
Anschließend wurden die in Tabelle II angegebenen Acrylate mit 0,9 g Peroxodisulfat gemischt und binnen 30 Minuten zudosiert. Es wurde noch etwa 3 bis 4 Stunden bei 80 °C nachgerührt.
Das so erhaltene emulgierte Polymerisat wurde dem unten beschriebenen Bindemittel zugesetzt.

**Tabelle II**

| Polymerisat (B) mit einem Kern und zwei Schalen | | | | | | | | | |
|---|---|---|---|---|---|---|---|---|---|
| | Monomere | | | | | | | | |
| Bsp. Nr | Styrol (g) | Butadien (g) | Styrol (g) | MMA⁽¹⁾ (g) | EA⁽²⁾ (g) | DMAEA⁽³⁾ (g) | DEAEA⁽⁴⁾ (g) | HEA⁽⁵⁾ (g) | HPA⁽⁶⁾ (g) |
| B₁₁ | 20 | 216 | 144 | 210 | - | - | - | - | - |
| B₁₂ | 20 | 252 | 168 | - | 92,4 | 18 | - | - | - |
| B₁₃ | 20 | 234 | 156 | - | 150 | - | 30 | - | - |
| B₁₄ | 20 | 252 | 168 | - | 92,4 | 9 | - | 9 | - |
| B₁₅ | 20 | 234 | 156 | - | 150 | - | 20 | - | 10 |
| B₁₆ | 20 | 270 | 90 | 210 | - | - | - | - | - |
| B₁₇ | 20 | 315 | 105 | - | 92,4 | 18 | - | - | - |
| B₁₈ | 20 | 292,5 | 97,5 | - | 150 | - | 30 | - | - |
| B₁₉ | 20 | 315 | 105 | - | 92,4 | 9 | - | 9 | - |
| B₂₀ | 20 | 292,5 | 97,5 | - | 150 | - | 20 | - | 10 |

| | | | | | | | | | |
|---|---|---|---|---|---|---|---|---|---|
| ⁽¹⁾ bis ⁽⁶⁾ siehe legende zu Tabelle (I) | | | | | | | | | |

### III) Herstellung des Bindemittels

960 g eines Diglycidylethers auf Basis Bisphenol A mit einem Epoxidequivalentgewicht von etwa 490, 110 g Nonylphenol und 56 g Phenoxypropanol wurden auf 130 °C unter Rühren erwärmt. Man gab 1,1 g Dimethylbenzylamin hinzu und ließ so lange reagieren, bis das Epoxidequivalentgewicht 1040 betrug. Man verdünnte mit 403 g eines Lösungsmittelgemisches aus Isobutanol und Butylglykol (Gewichtsverhältnis 9:1) und kühlte auf 60 °C ab. Anschließend tropfte man Methylethanolamin hinzu und ließ noch weitere 10 Minuten reagieren. Dann wurden 98,2 g des Amidamins (s.u.) und 41 g Isobutanol-Butylglykol-Gemisch (9:1) hinzugegeben.
Man hielt die Temperatur noch 2 Stunden auf 80 °C. Feststoffgehalt:70,1 Gew.-%; Aminzahl: 50,8 mg KOH/g.

### Amidamin

290 g Hexamethylendiamin, 218 g Dimerfettsäure (z. B. Pripol® 1014, Fa. Unichema), 70 g Leinölfettsäure (z. B. Nouracid LE80, Fa. Akzo) und 31 g Xylol wurden auf 190 °C erhitzt und 48 g Reaktionswasser-Xylol-Gemisch azeotrop abdestilliert. Man verdünnte mit 92 g Xylol. Anschließend wurden nochmals 7 g Hexamethylendiamin zugesetzt. Die Aminzahl des Produktes betrug 350 mg KOH und die Säurezahl 1,8 KOH/g. IV) Herstellung der Pigmentzubereitung

660,8 g eines Bisphenol A Diglycidylethers mit einem Epoxidequivalentgewicht von 190 (z. B. Epoxidharz EPON 828 der Firma Shell) wurden mit 260,6 g Bisphenol A und 61,5 g Dodecylphenol gemischt und auf 110 °C erhitzt bis sich eine klare Lösung gebildet hatte. Dann wurden 0,98 g Ethyltriphenylphosphoniumiodid zugesetzt, wonach die Temperatur auf 150 °C anstieg. Nach dem Abklingen der exothermen Reaktion hielt man die Mischung 90 min lang bei 130 °C. Anschließend wurde mit 513,5 g 2-Butoxyethanol verdünnt und auf 80 °C gekühlt, woraufhin binnen 30 min 244,2 g Thiodiethanol (50 % aktiv) zugetropft wurden. Anschließend wurden 134,2 g Thiodiethanol (50 % aktiv) zugetropft. Anschließend wurden 134,1 g Dimethylolpropionsäure und 30,6 g Wasser zugesetzt. 98 g dieses Harzes wurden mit 175 g Titandioxid, 8 g Bleisilikat, 35 g Aluminumsilikat, 11 g Dibutylzinnoxid, 3,5 g Perlruß und 169,5 g Wasser zu einer Paste angerührt.

### V) Herstellung der Elektrotauchlackierbäder

1780 g Bindemitteldispersion wurden mit jeweils 332 g eines der oben erhaltenen erfindungsgemäßen Polymerisate (B) und 698 g der Pigmentpaste versetzt und mit vollentsalztem Wasser auf 5000 g aufgefüllt. Bezogen auf den Gesamffestgehalt der Elektrotauchlacke betrug der Polymerisaffestgehalt jeweils 10 Gew.-%. Die Elektrotauchlackierbäder wurden 7 Tage bei 30 °C gerührt. An kathodisch geschalteten 190 x 150 mm großen Probeblechen aus zinkphosphatiertem Stahlblech wurden bei einer Spannung von 150 bis 500 V innerhalb von 2 Minuten bei einer Badtemperatur von 27 °C Kunstharzfilme einer Dicke von 22 bis 24 µm abgeschieden. Anschließend wurden die Kunstharzfilme binnen 20 Minuten bei 165 °C eingebrannt.
Die Zusammensetzungen der Bäder und die Prüfergebnisse sind in Tabelle III aufgelistet.

**Tabelle III**

| ETL-Bad Nr. | Polymerisat | Verlauf | ET [mm] | RI [Nm] | DB(-) [mm²/Rostgrad] | KWT U/F/K [mm] |
|---|---|---|---|---|---|---|
| | | | | | | |

| erfindungsgemäß | | | | | | |
|---|---|---|---|---|---|---|
| 1 | B1 | 4 | 7.9 | 6.8 | 7. 5/4 | 1.3/1/3 |
| 2 | B2 | 3 | 8.1 | 9.1 | 6.1/4 | 1.4/1/3 |
| 3 | B3 | 2 | 8.0 | 13.6 | 5.0/3 | 1.5/1/2 |
| 4 | B4 | 2 | 8.9 | 18.1 | 3.5/2 | 1.1/0/1 |
| 5 | B5 | 1 | 9.5 | >18.1 | 2.5/1 | 1.1/0/1 |
| 6 | B6 | 4 | 6.9 | 9.1 | 7.6/3 | 1.4/1/3 |
| 7 | B7 | 3 | 7.5 | 11.3 | 6.0/3 | 1.3/1/2 |
| 8 | B8 | 3 | 7.6 | 13.6 | 5.8/3 | 1.6/2/3 |
| 9 | B9 | 2 | 7.4 | 15.8 | 6.1/2 | 1.2/1/2 |
| 10 | B10 | 2 | 8.1 | 18.1 | 5.3/1 | 1.3/0/1 |
| 11 | B11 | 4 | 6.6 | 4.5 | 8.1/4 | 1.4/1/3 |
| 12 | B12 | 4 | 6.9 | 6.8 | 7.2/3 | 1.1/1/1 |
| 13 | B13 | 2 | 8.0 | 11.3 | 5.0/2 | 1.3/1/2 |
| 14 | B14 | 2 | 8.2 | 15.8 | 4.2/2 | 1.6/1/3 |
| 15 | B15 | 2 | 8.8 | 8.1 | 3.9/1 | 1.1/1/1 |
| 16 | B16 | 3 | 6.9 | 4.5 | 7.6/3 | 1.7/0/3 |
| 17 | B17 | 3 | 7.1 | 9.1 | 6.1/2 | 1.3/1/2 |
| 18 | B18 | 2 | 7.9 | 13.6 | 5. 9/2 | 1.2/0/2 |
| 19 | B19 | 2 | 18.1 | 15.8 | 5.1/2 | 1.4/1/1 |
| 20 | B20 | 2 | 8.5 | 18.1 | 4.6/1 | 1.6/1/1 |
| Zum Vergleich | | | | | | |
| V1 | - | 3 | 4.9 | <1.1 | 13.7/5 | 2.2/2/5 |
| Verlauf: Güte des Verlaufs in Notenstufen 1 (sehr guter Verlauf) bis 5 (sehr schlechter Verlauf) ET: Eriksentiefung RI: Reverse Impact, Schlagtiefung; Bestimmung mit einem mandrel impact fester der Fa. Gardner nach AST M D2794 DB(-): Mercedes-Benz-Einzelsteinschlagtest bei einer Prüftemperatur von -20 °C; DIN 55 995, Verfahren A; Fa. Erichsen Technische Beschreibung Modell 490 (1981); Rostgrade 0 (kein Rost) bis 5 (sehr stark verrostet) KWT: Klimawechseltest, 10 Zyklen; Unterwandetung U in mm; Flächenrost F sowie Kantenrost in Notenstufen 0 (kein Rost) bis 5 (sehr stark vertostet) | | | | | | |

## Patentansprüche

1. Kunstharze, enthaltend als wesentliche Komponenten
A) 20 bis 95 Gew.-% vernetzbare Bindemittel aus der Gruppe der Polymerisations-, Polyadditions- oder Polykondensationsprodukte mit reaktionsfähigen Zentren in Form von Hydroxy-, Thio-, primären und/oder sekundären Aminogruppen und/oder hydrophilen Zentren in Form von Ammonium-, Sulfonium- und/oder Phosphoniumgruppen und
B) 5 bis 80 Gew.-% Polymerisate, aufgebaut aus einem Kern und einer oder mehreren Schalen sowie darüber hinaus
C) 0 bis 50 Gew.-% eines oder mehrerer Vernetzer und
D) 0 bis 50 Gew.-% einer Pigmentzubereitung aus einem oder mehreren Pigmenten und einem Harz mit oberflächenaktiven Eigenschaften und
E) 0 bis 10 Gew.-% Zusatzstoffe und/oder Hilfsmittel,
dadurch gekennzeichnet, daß
das Polymerisat (B) erhältlich ist durch γ) Emulsionspolymerisation von 3 bis 90 Gew.-% eines Monomerengemisches (γ) aus
γ₁) 30 bis 100 Gew.-% mindestens eines vinylaromatischen Monomeren
γ₂) 0 bis 70 Gew.-% mindestens eines C₁-C₁₈-Alkylmethacrylates
γ₃) 0 bis 70 Gew.-% mindestens eines C₁-C₁₈-Alkylacrylates
γ₄) 0 bis 30 Gew.-% mindestens eines zwei- oder mehrfach ethylenisch ungesättigten Monomeren mit mindestens einer nicht konjugierten Doppelbindung
γ₅) 0 bis 30 Gew.-% mindestens eines weiteren Monomeren
und δ) anschließende Emulsionspolymerisation in Gegenwart des nach Stufe (γ) erhaltenen Emulsionspoly-merisates von 2 bis 70 Gew.-% eines Monomerengemisches (δ) aus
δ₁) 10 bis 90 Gew.-% mindestens eines konjugierten Diens
δ₂) 1 0 bis 90 Gew.-% mindestens eines vinylaromatischen Monomeren
δ₃) 0 bis 30 Gew.-% mindestens eines zwei- oder mehrfach ethylenisch ungesättigten Monomeren mit mindestens einer nicht konjugierten Doppelbindung
δ₄) 0 bis 30 Gew.-% mindestens eines weiteren Monomeren
und ε) anschließende Emulsionspolymerisation in Gegenwart des nach Stufe (δ) erhaltenen Emulsionspolymerisates von 5 bis 95 Gew.-% eines Monomerengemisches (ε) aus
ε₁) 10 bis 80 Gew.-% mindestens eines vinylaromatischen Monomeren
ε₂) 20 bis 90 Gew.-% eines C₁-C₁₈-Alkylmethacrylates
ε₃) 0 bis 70 Gew.-% mindestens eines C₁-C₁₈-Alkylacrylates
ε₄) 0 bis 30 Gew.-% mindestens eines zwei- oder mehrfach ethylenisch ungesättigten Monomeren mit mindestens einer nicht konjugierten Doppelbindung
ε₅) 0 bis 30 Gew.-% mindestens eines weiteren Monomeren,
wobei sich die Gewichtsprozente der in den Stufen (γ) bis (ε) eingesetzten Monomerengemische (γ) bis (ε) auf die Komponente (B) beziehen und sich auf 100 Gew.-% addieren.

2. Kunstharze nach Anspruch 1, in denen die Monomerengemische (γ) bis (ε) aus Monomeren ausgewählt aus der Gruppe Butadien, Isopren, Styrol, C₁-C₃-Alkylstyrole, C₁-C₄-Acrylate, C₁-C₄-Dialkylamino-C₁-C₄-acrylate und Hydroxy-C₁-C₄-acrylate, bestehen.

3. Verfahren zur Herstellung der Kunstharze gemäß den Ansprüchen 1 bis 2, dadurch gekennzeichnet, daß man eine wäßrige Emulsion der Komponente (B) mit einer wäßrigen Dispersion der übrigen Komponenten mischt.

4. Wäßrige Dispersion enthaltend von 5 bis 50 Gew.-% Kunstharze nach einem der Ansprüche 1 und 2.

5. Verwendung der wäßrigen Dispersion gemäß Anspruch 4 in Elektrotauchlackierbädern.

6. Mittels kathodischer Elektrotauchlackierung beschichteter Gegenstand, erhältlich unter Verwendung der wäßrigen Dispersionen gemäß Anspruch 5.
